# EUROPEAN PATENT APPLICATION

(11) **EP 0 745 322 A1**
(43) Date of publication of application: **04.12.1996**
(21) Application number: 96201452.8
(22) Date of filing: 24.05.1996
(51) Int. Cl.: A01G 25/16

(54) **A casing for an irrigation control box**

(30) Priority: 30.05.1995 IT MI950377 U
(71) Applicant: CLABER S.P.A., I-33080 Fiume Veneto Pordenone (IT)
(72) Inventor: Roman, Gianfranco, 33087 Pasiano (PN) (IT)
(74) Representative: Mittler, Enrico

(57) **Abstract**

A casing for an irrigation control box comprises a main casing (50) in which there are obtained an inlet conduit (25) for an irrigation liquid, a section for cutting-off the liquid (51) provided with a solenoid valve (7), an outlet conduit (27) of the liquid, and a shell (6) for containing said solenoid valve (7). The casing comprises a closing element (8) of said shell (6), that can be coupled to said shell (6) in a removable manner to allow access to said solenoid valve (7). The closing element (8) also acts as support and sealed housing for an electronic control unit (9) of the solenoid valve (7). The shell (6) is provided on the bottom with at least one aperture (24) for the outflow of any liquid that has seeped in or of the condensate that has formed in the shell (6) itself.

## Description

The present invention relates to a casing for an irrigation control box.

It is known that in the gardening sector timed automatic irrigation systems provided with control boxes that can be programmed by the user are becoming increasingly widespread.

Such control boxes comprise substantially an electronic control unit that operates one (or more) solenoid valves that cut off the flow of the irrigation liquid.

The electronic control unit and the solenoid valve (or valves) controlled by it are housed inside a same casing. It follows that a fundamental requisite for the good operation of the control box over time is the total insulation of the electrical part of the control box (electronic control unit, electromagnetic circuit of the solenoid valve) from the hydraulic part (element for cutting-off the liquid) and from the (evidently damp) surrounding environment.

Many of the problems that afflict currently-existing control boxes find an explanation in the very fact that they do not ensure a perfect insulation of the electronic control unit and of the electrical part of the solenoid valve against seepages of liquid or the formation of condensate.

In view of the described state of the art, one object of the present invention is to provide a casing for an irrigation control box that ensures the best possible insulation of the electrical part of the control box from the hydraulic part and from the surrounding environment.

According to the present invention, the abovementioned objects are attained by means of a casing for an irrigation control box comprising a main casing in which there are obtained an inlet conduit for an irrigation liquid, a section for cutting-off the liquid provided with at least one solenoid valve, an outlet conduit of the liquid and a shell for containing said solenoid valve, and a closing element that can be coupled to said shell in a removable manner to allow access to said solenoid valve, characterized in that said closing element also acts as support and sealed housing for an electronic control unit of said solenoid valve, and in that said shell is provided on the bottom with at least one aperture for the outflow of any liquid that has seeped in or of the condensate that has formed in the shell itself.

In one embodiment, the aperture in the bottom of the shell containing the solenoid valve comprises a plurality of apertures forming an outflow grid.

Thanks to the present invention, the electronic control unit of the irrigation control box is completely insulated from the hydraulic part. Moreover, thanks to the fact that the shell containing the solenoid valve is provided on its bottom with an outflow grid, any liquid that may have seeped in or the condensate that may have formed in the containment shell does not remain in the shell itself, but flows away through the grid, thus avoiding any disturbance to the operation of the solenoid valve and the deterioration of the latter.

The features and the advantages of the present invention will be made more evident by the following detailed description of an embodiment thereof, illustrated as a non-limiting example in the enclosed drawings, wherein:
Fig. 1 is a front view of the casing for an irrigation control box according to the present invention;
Fig. 2 is a side view from the left of the casing of Fig. 1;
Fig. 3 is a cross-sectional view taken along the line III-III of Fig. 1;
Fig. 4 is a cross-sectional view taken along the line IV-IV of Fig. 3, with respect to which for reasons of clarity the solenoid valve has been removed;
Fig. 5 is a cross-sectional view taken along the line V-V of Fig. 4.

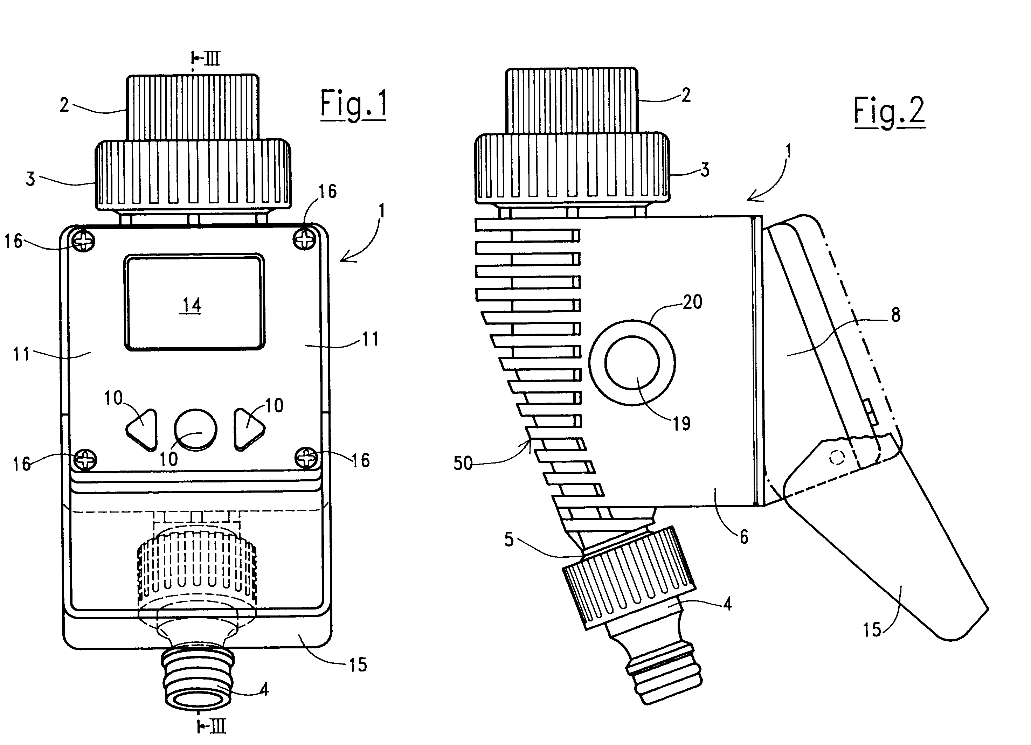

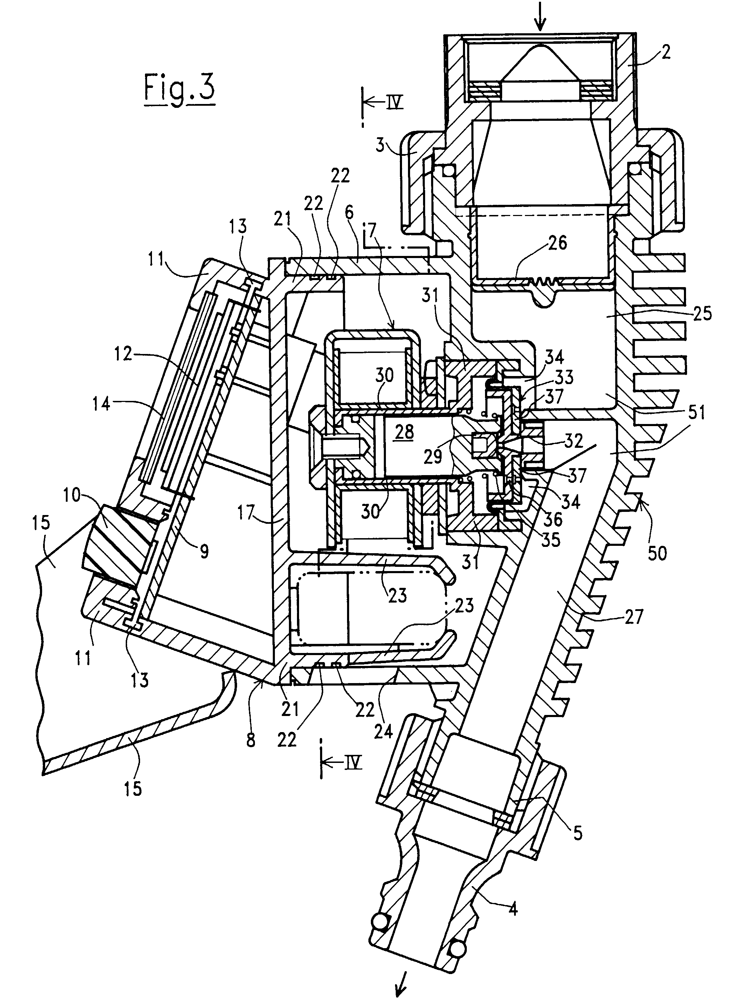

There is shown in Figs. 1 and 2 the outside of a casing 1 for an irrigation control box according to the invention. There is seen an inlet sleeve 2, fastened to the casing 1 by means of a ring nut 3, and an outlet fitting 4, screwed onto a threaded appendix 5 of the casing 1 (better visible in Fig. 3), to which an irrigation line (not shown) can be coupled by means of a further fitting.

As is visible by also making reference to Fig. 3, the casing 1 consists substantially of a main casing 50, comprising a shell 6 for containing a solenoid valve 7, and a closing element 8 of the shell 6, said closing element 8 also acting as an element of support and sealed housing for a printed-circuit plate 9, mounted in an inclined position with respect to a vertical axis; the printed-circuit plate 9 constitutes an electronic unit for driving the control box. On the printed-circuit plate 9 there are mounted a keyboard 13 comprising three keys 10, and a display unit 12. On the closing element 8 of the shell 6, above the printed-circuit plate 9, there is mounted and fastened by screws a panel 11 with apertures for access to the keys 10 and a transparent screen 14 for protecting the display unit 12. On the closing element 8 of the shell 6 there is also hinged an openable cover 15 that, when closed, covers the panel 9 entirely (as shown with a dashed and dotted line in Fig. 2), while when it is open it allows access to the keys 10 and to read the data shown on the display unit 12.

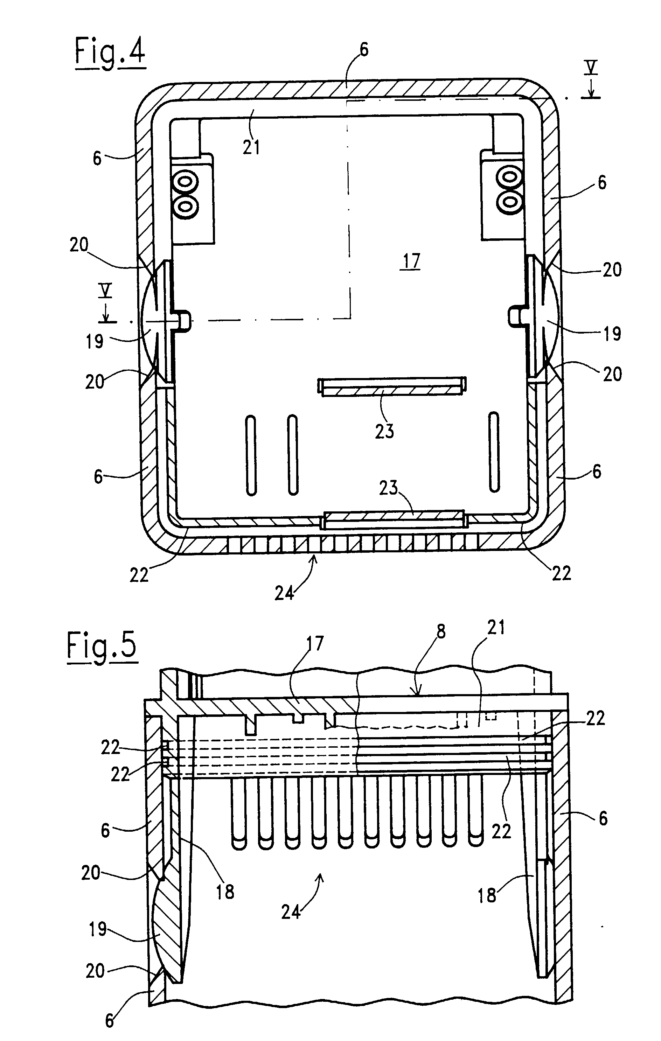

The closing element 8 has a plane surface 17 that performs the closing of the shell 6, to which the closing element 8 is snap-connected by means of two flexible arms 18, visible in Fig. 5, that widen at the ends to form two connecting elements 19, substantially in the form of a cap, that engage in respective holes 20 drilled in the side walls of the shell 6. The two connecting elements 19 are thus accessible even from the outside of the shell 6, so that by means of a simple pressure on them it is possible to disengage the closing element 8 from the shell 6 and remove it from the latter, so as to access the solenoid valve 7. From the plane wall 17 there also extend two flexible jaws 23 for connecting to a battery for supplying the electronic control unit and the solenoid valve 7 (the battery is shown in Fig. 3 with a line of one dash and two dots).

The closing element 8 is also provided with a rectangular flange 21 whose external dimensions are substantially identical with the internal dimensions of the shell 6, so that said flange 21 fits accurately on the shell 6 itself. Two grooves 22 are obtained on the entire external surface of the flange 21.

In the bottom wall of the shell 6 there is obtained a grid 24, visible in Figs. 4 and 5, that allows the discharge of any liquid deposit that may penetrate inside the shell 6 by seepage or by the formation of condensate. Moreover, the grooves 22 allow the flow toward the grid 24, and thus to the outside, of any condensate deposit that may form along the internal walls of the shell 6.

The inlet sleeve 2, threaded internally so that it can for example be screwed onto a cock, is connected to an inlet conduit 25 obtained in the casing 50, inside which there is also housed a filtering element 26. In the casing 1 there is also obtained an outlet conduit 27 that leads to the threaded appendix 5, and a cut-off section of the liquid 51.

The solenoid valve 7 shown in Fig. 3 is of the type described in the Italian patent application No. MI94A002510 filed on 14 December 1994. This is a bistable electromagnetically-operated solenoid valve comprising a steel piston 28 slidable in a chamber defined by a cylindrical appendix 30 of a flange 31 and having at one end a rubber pad 29 that, when the piston 28 is in the position shown in Fig. 3, closes a hole 32 drilled in a gasket casing 33, thus keeping the liquid present in a first annular chamber 34, communicating with the inlet conduit 25, and in a second annular chamber 35, communicating with the first annular chamber 34 through a hole 36, from flowing into the outlet conduit 27. When, following a signal from the electronic unit, the piston 28 slides away from the gasklet casing 33, the pad frees the hole 32, and the liquid present in the second chamber 35 flows into the outlet conduit 27; the depression that is created in the second chamber 35 determines the deflection of a membrane 37, thus making it possible for the liquid present in the first chamber 34 to flow to the outlet conduit 27.

The electronic control unit is for example of the type described in the Italian patent application No. MI94A001922 filed on 22 September 1994, two of the keys 10 (actually, the lateral ones) allowing the visualization on the display unit 12 of a plurality of pages of a menu of programming data stored in a memory of a processing unit and the setting of each page of data to be programmed, and the third key (the middle key) driving the activation of a procedure for the introduction of programming data in the page currently displayed.

## Claims

1. A casing for an irrigation control box comprising a main casing (50) in which there are obtained an inlet conduit (25) for an irrigation liquid, a section for cutting-off the liquid (51) provided with at least one solenoid valve (7), an outlet conduit (27) of the liquid and a shell (6) for containing said solenoid valve (7), and a closing element (8) that can be coupled to said shell (6) in a removable manner to allow access to said solenoid valve (7), characterized in that said closing element (8) also acts as support and sealed housing for an electronic control unit (9) of said solenoid valve (7), and in that said shell (6) is provided on the bottom with at least one aperture (24) for the outflow of any liquid that has seeped in or of the condensate that has formed in the shell (6) itself.

2. A casing according to claim 1, characterized in that said aperture (24) comprises a plurality of apertures forming an outflow grid (24) on the bottom of said shell (6).

3. A casing according to claim 1 or 2, characterized in that said closing element (8) is provided with a flange (21) having shape and dimensions such that it fits accurately in said shell (6), on the entire external surface of said flange (21) there being obtained at least one groove (22) communicating with said aperture (24) to make it easy for any condensate that may have formed on the internal walls of said casing (6) to flow away.

4. A casing according to claim 3, characterized in that said at least one groove (22) comprises two parallel grooves (22).

5. A casing according to any of the preceding claims, characterized in that said closing element (8) comprises a pair of flexible arms (18) extending toward the inside of the shell (6) and provided at the ends with coupling elements (19) that are snap-engaged in respective holes (20) drilled in the side walls of said shell (6).

6. A casing according to claim 5, characterized in that said holes (20) are through holes, so that said coupling elements (19) are accessible from the outside to allow, by pressure on them, the closing element (8) to be disengaged from the casing (50).

7. A casing according to any of the preceding claims, characterized in that said electronic control unit comprises a printed-circuit board (9) to which a keyboard (13) and a display unit (12) are fastened, said printed-circuit board (9) being covered by a panel (11) fastened to the closing element (8) and provided with apertures for the passage of the keys (10) of the keyboard (13) and with a transparent screen (14) for protecting the display unit (12).

8. A casing according to claim 7, characterized in that said keyboard (13) comprises three keys (10).

9. A casing according to claim 7 or 8, characterized in that an openable cover (15) for covering said panel is hinged to said closing element (8).

10. A casing according to any of the preceding claims, characterized in that said closing element (8) also comprises means (23) for coupling a battery extending inside said shell (6).
